# EUROPÄISCHE PATENTSCHRIFT

(11) **EP 4 268 560 B1**
(45) Veröffentlichungstag und Bekanntmachung des Hinweises auf die Patenterteilung: **18.06.2025**
(21) Anmeldenummer: 23155790.1
(22) Anmeldetag: 09.02.2023
(51) Int. Cl.: A01B 69/04, G05D 1/00, G06Q 10/047, G06Q 50/02

(54) **AUTONOME LANDWIRTSCHAFTLICHE ARBEITSMASCHINE**
AUTONOMOUS AGRICULTURAL WORKING MACHINE
MACHINE DE TRAVAIL AGRICOLE AUTONOME

(30) Priorität: 27.04.2022 DE 102022110156
(43) Veröffentlichungstag der Anmeldung: 01.11.2023
(73) Patentinhaber: CLAAS E-Systems GmbH, 49201 Dissen (DE)
(72) Erfinder: Ehlert, Christian, 33719 Bielefeld (DE); Bormann, Bastian, 33334 Gütersloh (DE); Baumgarten, Joachim, 48361 Beelen (DE); Neitemeier, Dennis, 59510 Lippetal (DE); Witte, Johann, 58730 Fröndenberg (DE); Redenius, Jannik, 32361 Pr. Oldendorf (DE); Bohl, Arne, 33330 Gütersloh (DE); Nacke, Eberhard, 33332 Gütersloh (DE); Apke, Christoph, 33659 Bielefeld (DE); Thiesmann, Waldemar, 49080 Osnabrück (DE); Monkenbusch, Robin, 33378 Rheda-Wiedenbrück (DE); Korthals, Timo, 33818 Leopoldshöhe (DE); Schröder, Axel, 33332 Gütersloh (DE); Mähler, Reinhold, 33378 Rheda-Wiedenbrück (DE)
(74) Vertreter: CLAAS Gruppe

(56) Entgegenhaltungen:
- US-A1- 2010 145 572
- US-A1- 2017 311 534
- US-B2- 10 394 238

## Beschreibung

Die Erfindung betrifft ein auf elektronischem Datenaustausch basierendes Assistenzsystem zur Befähigung eines autonomen Fahrzeuges als autonome landwirtschaftliche Arbeitsmaschine zu agieren und eine demgemäß autonome landwirtschaftliche Arbeitsmaschine nach dem Oberbegriff des Anspruchs 1.

In der modernen Landwirtschaft sind vermehrt Bestrebungen dahingehend zu erkennen Arbeitseinsätze autonom durchzuführen, um die Produktivität und Wirtschaftlichkeit der Prozesse zu erhöhen. Hierfür kommen sogenannte autonome landwirtschaftliche Arbeitsmaschinen zum Einsatz, die sich dadurch auszeichnen, dass kein Bediener in einer Kabine zur Steuerung derselben vorhanden ist. Demnach steht bei autonomen landwirtschaftlichen Arbeitsmaschinen kein Bediener zur Verfügung, der einen durchzuführenden landwirtschaftlichen Arbeitsablauf mit einer Abfolge von verschiedenen Arbeitsschritten kennt und einzelne Steuerfunktionen während des Betriebs der Arbeitsmaschine auf einer landwirtschaftlichen Fläche ausführen kann. Derartige autonome landwirtschaftliche Arbeitsmaschinen werden daher auch als unbemannte landwirtschaftliche Arbeitsmaschinen bezeichnet.

Aus der WO2015/173073A1 ist beispielsweise ein Verfahren zum Ernten von Erntegut mittels bemannter landwirtschaftlicher Arbeitsmaschinen und unbemannter landwirtschaftlicher Arbeitsmaschinen, also autonomen landwirtschaftlichen Arbeitsmaschinen, bekannt. Der Betrieb und die Wegstrecke, die von einer unbemannten landwirtschaftlichen Arbeitsmaschine während ihres Betriebs auf einer landwirtschaftlichen Fläche zurückgelegt wird, werden hier durch den Bediener einer bemannten landwirtschaftlichen Arbeitsmaschine gesteuert. Dieser befindet sich hierfür durchgehend während des Betriebs der autonomen landwirtschaftlichen Arbeitsmaschinen in unmittelbarer Nähe zu diesen. Der Bediener der bemannten landwirtschaftlichen Arbeitsmaschine ist demnach dazu in der Lage, den Betrieb der unbemannten landwirtschaftlichen Arbeitsmaschinen visuell zu überwachen und die unbemannten landwirtschaftlichen Arbeitsmaschinen entsprechend dem geplanten Einsatz über eine drahtlose Fernsteuerung zu steuern.

Nachteilig bei einem derartigen Verfahren ist, dass der Betrieb der autonomen landwirtschaftlichen Arbeitsmaschine an die Gegenwart eines Bedieners einer bemannten landwirtschaftlichen Arbeitsmaschine zwingend geknüpft ist, der sich stets in unmittelbarer Nähe zu der unbemannten landwirtschaftlichen Arbeitsmaschine befindet, um diese fernsteuern zu können. Zwar werden demnach Arbeitsschritte dem Prinzip nach autonom von den unbemannten Arbeitsmaschinen durchgeführt, jedoch ist stets die Nähe einer Person zur Durchführung der Arbeitsschritte durch die autonome landwirtschaftliche Arbeitsmaschine erforderlich.

Ein weiterer Nachteil autonom agierender landwirtschaftlicher Arbeitsmaschinen ist, dass der Nutzer dieser autonom agierenden landwirtschaftlichen Arbeitsmaschine die Kontrolle über die Arbeitsqualität und den sicheren Betrieb verliert, sodass nutzerseitig häufig eine Ungewissheit darüber besteht, wie zuverlässig und qualitativ hochwertig die Arbeitsleistung der autonom agierenden landwirtschaftlichen Arbeitsmaschine tatsächlich ist.

Weiter ist aus der US 10,394,238 B2 ein Assistenzsystem bekannt geworden, welches die Arbeitskosten unbemannter, autonom agierender landwirtschaftlicher Arbeitsmaschinen in einem Feldeinsatz optimiert. Ein Kostenplanungssystem ist so eingerichtet, dass es einen vorgegebenen Plan so optimiert, dass sich die Prozesskosten autonom agierender landwirtschaftlicher Arbeitsmaschinen verbessern. Nachteilig bei derartigen Systemen ist, dass der Farmer oder Lohnunternehmer in diesen Prozess nicht eingebunden ist und nur gelegentlich Informationen über die Optimierungsqualität erhält.

Es ist deshalb Aufgabe der Erfindung die beschriebenen Nachteile des Standes der Technik zu vermeiden und insbesondere eine autonome landwirtschaftliche Arbeitsmaschine vorzuschlagen, die eine autonome Durchführung von Arbeitsschritten ermöglicht und zwar ohne, dass sich eine Person in der Nähe der autonomen landwirtschaftlichen Arbeitsmaschine aufhalten muss, um den Betrieb der autonomen landwirtschaftlichen Arbeitsmaschine zu überwachen und zu steuern und zudem den Nutzer hinsichtlich der Arbeitsqualität der autonom agierenden landwirtschaftlichen Arbeitsmaschine informiert zu halten.

Diese Aufgabe wird erfindungsgemäß durch die kennzeichnenden Merkmale des Anspruchs 1 gelöst.

Indem ein auf elektronischem Datenaustausch basierendes Assistenzsystem ein autonomes Fahrzeug befähigt als autonome landwirtschaftliche Arbeitsmaschine zu agieren und einen von einem Auftraggeber vorgegebenen Einsatzplan abzuarbeiten, wobei der Einsatzplan Zieldaten umfasst und das Assistenzsystem eingerichtet ist eine Erfolgsgarantie für die Erfüllung des Einsatzplanes in der Weise zu garantieren, dass das Assistenzsystem
- aus dem Einsatzplan die Zieldaten extrahiert,
- den extrahierten Zieldaten Soll-Grenzwerte zuordnet
- die Ist-Grenzwerte der Zieldaten und die Abweichung dieser Ist-Grenzwerte zu den definierten Soll-Grenzwerten ermittelt
- bei Über- oder Unterschreitung eines Soll-Grenzwertes Maßnahmen einleitet, die den jeweiligen Ist-Grenzwert im Bereich des definierten Soll-Grenzwertes halten,
wird sichergestellt, dass die landwirtschaftliche Arbeitsmaschine autonom optimierte Arbeitsschritte durchführen kann und zwar ohne, dass sich eine Person in der Nähe der autonomen landwirtschaftlichen Arbeitsmaschine aufhalten muss, um den Betrieb der autonomen landwirtschaftlichen Arbeitsmaschine zu überwachen und zu steuern und den Nutzer hinsichtlich der Arbeitsqualität der autonom agierenden landwirtschaftlichen Arbeitsmaschine informiert zu halten.

In einer vorteilhaften Ausgestaltung der Erfindung definiert der Einsatzplan neben Fahrbewegungen und Arbeitstätigkeiten der autonomen landwirtschaftlichen Arbeitsmaschine zumindest für die Arbeitstätigkeiten auch Zieldaten, sodass der Nutzer uneingeschränkt die von der autonomen landwirtschaftlichen Arbeitsmaschine durchzuführenden Tätigkeiten und die erwarteten Arbeitsergebnisse vorgeben kann.

Indem in einer weiteren vorteilhaften Ausgestaltung der Erfindung die einzuleitenden Maßnahmen in Kategorien von Maßnahmen unterteilt sind und ein oder mehrere der Kategorien Arbeitsqualität, Service/Verschleiß/Wirtschaftlichkeit und optimierter Feldeinsatz/Befahrbarkeit umfassen wird sichergestellt, dass die autonome landwirtschaftliche Arbeitsmaschine einerseits eine optimale Arbeitsqualität erreicht und zugleich wirtschaftlich und bodenschonend arbeitet.

In einer weiteren vorteilhaften Ausgestaltung der Erfindung umfassen die der Kategorie Arbeitsqualität zuzuordnenden Maßnahmen diejenigen Maßnahmen, die die Arbeitsqualität der autonomen landwirtschaftlichen Arbeitsmaschine verbessern, wobei die Arbeitsqualität von den aus dem jeweiligen Einsatzplan extrahierten Zieldaten der Fahrbewegungen und Arbeitstätigkeiten bestimmt wird. Dies hat insbesondere den Effekt, dass die autonome landwirtschaftliche Arbeitsmaschine sehr präzise die vom Auftraggeber vorgegebene Arbeitsqualität erreicht.

In einer weiteren vorteilhaften Ausgestaltung der Erfindung umfassen die der Kategorie Service/Verschleiß/Wirtschaftlichkeit zugeordneten Maßnahmen diejenigen Maßnahmen, die die Arbeitsqualität der autonomen landwirtschaftlichen Arbeitsmaschine verbessern, wobei die Arbeitsqualität von den aus dem jeweiligen Einsatzplan extrahierten Zieldaten der Fahrbewegungen und Arbeitstätigkeiten bestimmt wird. Dies hat insbesondere den Effekt, dass die autonome landwirtschaftliche Arbeitsmaschine kosteneffizient betrieben werden kann, wobei das kosteneffiziente Betreiben der landwirtschaftlichen Arbeitsmaschine zumindest den optimierten Einsatz von Energie, den optimierten Ersatz von Verschleißteilen und eine Optimierung von Stillstandzeiten umfasst.

In einer weiteren vorteilhaften Ausgestaltung der Erfindung umfassen die der Kategorie optimierter Feldeinsatz/Befahrbarkeit zuzuordnenden Maßnahmen diejenigen Maßnahmen, die die Arbeitsqualität der autonomen landwirtschaftlichen Arbeitsmaschine verbessern, wobei die Arbeitsqualität von den aus dem jeweiligen Einsatzplan extrahierten Zieldaten der Fahrbewegungen und Arbeitstätigkeiten bestimmt wird. Dies hat insbesondere den Effekt, dass die autonome landwirtschaftliche Arbeitsmaschine mit einem optimierten Einsatz von Energie betreibbar ist, ein bodenschonendes Befahren des zu bearbeitenden Territoriums und eine Optimierung von Stillstandzeiten sicherstellt.

In einer vorteilhaften Weiterbildung der Erfindung sind dem Assistenzsystem zur Steuerung und Überwachung der autonomen landwirtschaftlichen Arbeitsmaschine Module zugeordnet, wobei die Module die Module "Einsatzplanung", "erforderliche Informationen", "Steuerung" und "Überwachung" umfassen und die abgeleiteten Maßnahmen unter Einbeziehung dieser dem Assistenzsystem zugeordneten Module "Einsatzplanung", "erforderliche Informationen", "Steuerung" und "Überwachung" umgesetzt werden, wobei je nach Art der umzusetzenden Maßnahmen ein oder mehrere dieser Module in den Optimierungsprozess eingebunden sind. Dies hat insbesondere den Effekt, dass je nach durchzuführender Maßnahme eine schnelle Umsetzung der Maßnahme möglich wird, was letztlich die Arbeitsqualität der autonomen landwirtschaftlichen Arbeitsmaschine verbessert.

In einer weiteren vorteilhaften Ausgestaltung der Erfindung generiert das Assistenzsystem eine Information, in welchem Umfang die aus dem Einsatzplan extrahierten Zieldaten eingehalten wurden, wobei das Assistenzsystem weiter eingerichtet ist, dem Auftraggeber diese Information als Grad der Zielerreichung zu kommunizieren. Auf diese Weise wird der Nutzer hinsichtlich der Arbeitsqualität der autonom agierenden landwirtschaftlichen Arbeitsmaschine informiert gehalten.

Indem das Assistenzsystem in einer vorteilhaften Ausgestaltung eingerichtet ist, dem Auftraggeber eine Nutzungsgebühr in Rechnung zu stellen, deren Höhe sich nach dem Grad der Zielerreichung richtet und wobei die Nutzungsgebühr umso höher dotiert ist je besser das Fahrerassistenzsystem die vom Auftraggeber vorgegebenen Zieldaten erreicht hat, wird sichergestellt, dass einerseits das Vertrauen des Auftraggebers in die automatisierte Steuerung und Überwachung seiner autonomen landwirtschaftlichen Arbeitsmaschine durch das erfindungsgemäße Assistenzsystem zunimmt und er zudem eine Nutzungslizenz entrichtet, die sich am erreichten ökonomischen Effekt des Assistenzsystems ausrichtet.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine schematische Ansicht des erfindungsgemäßen Assistenzsystems
- Figur 2: eine Detailbeschreibung des erfindungsgemäßen Verfahrens am Beispiel einer Maschinenflotte
- Figur 3: eine schematische Darstellung der Erstellung der erfindungsgemäßen autonomen landwirtschaftlichen Arbeitsmaschine
- Figur 4: eine weitere Detaildarstellung des erfindungsgemäßen Assistenzsystems.

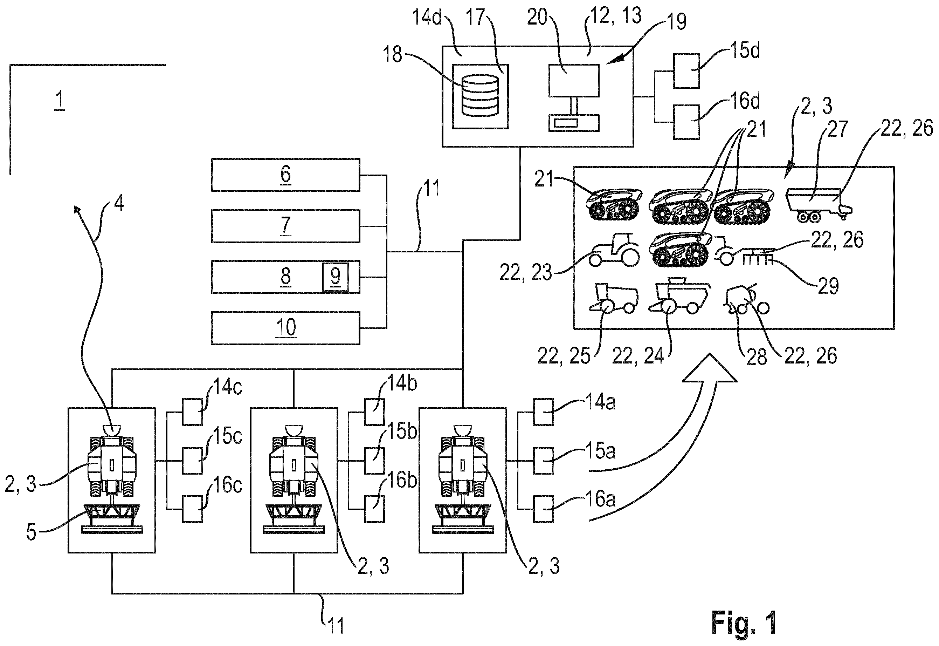

Fig. 1 zeigt exemplarisch eine schematische Darstellung des erfindungsgemäßen, auf elektronischem Datenaustausch basierenden Assistenzsystems 1 welches in noch näher zu beschreibender Weise eingerichtet ist, ein oder mehrere autonome Fahrzeuge 2 zu befähigen als autonome landwirtschaftliche Arbeitsmaschinen 3 zu agieren. Charakteristisch für das autonome Fahrzeug 2 und die aus ihm hervorgehende autonome landwirtschaftliche Arbeitsmaschine 3 ist, dass das autonome Fahrzeug 2 und die autonome landwirtschaftliche Arbeitsmaschine 3 unbemannt sind und selbstständig Fahrbewegungen 4 und Arbeitstätigkeiten 5 ausführen. Damit dies möglich wird ist das erfindungsgemäße Assistenzsystem 1 so beschaffen, dass es den Einsatz eines oder mehrerer autonomer Fahrzeuge 2 planen kann. Hierfür umfasst das Assistenzsystem 1 ein Modul "Einsatzplanung" 6. Damit das jeweilige autonome Fahrzeug 2 selbstständig Fahrbewegungen 4 und spezifische Arbeitstätigkeiten 5 ausführen kann umfasst das Assistenzsystem 1 zudem ein Modul "erforderliche Informationen" 7, wobei das Assistenzsystem 1 in noch näher zu beschreibender Weise die erforderlichen Informationen 7 beschafft und an das jeweilige autonome Fahrzeug 2 übermittelt. Damit die unbemannten autonomen Fahrzeuge 2 die für den jeweiligen Anwendungsfall erforderlichen Fahrbewegungen 4 und Arbeitstätigkeiten 5 in einer hohen Arbeitsqualität ausführen können ist zudem vorgesehen, dass das Assistenzsystem 1 ein Modul "Steuerung" 8 umfasst, sodass das Assistenzsystem 1 die Fahrbewegung 4 und die jeweilige Arbeitstätigkeit 5 zumindest teilweise steuert. Es liegt in diesem Zusammenhang im Rahmen der Erfindung, dass das Modul "Steuerung" 8 nur Basisdaten 9 an das jeweilige autonome Fahrzeug 2 übermittelt und die vollständige Steuerung der Fahrbewegung 4 und der jeweiligen Arbeitstätigkeit 5 von dem jeweiligen autonomen Fahrzeug 2 selbst vorgenommen wird. Denkbar ist aber auch, dass die Steuerung der Fahrbewegung 4 und der Arbeitstätigkeit 5 einer oder mehrerer autonomer Fahrzeuge 2 vollständig von dem erfindungsgemäßen Assistenzsystem 1 übernommen wird. Weiter ist das erfindungsgemäße Assistenzsystem 1 so beschaffen, dass es ein Modul "Überwachung" 10 umfasst mittels dessen der Arbeitsbetrieb, hier zumindest die Fahrbewegung 4 und die jeweilige Arbeitstätigkeit 5, in noch näher zu beschreibender Weise überwacht werden.

Das Assistenzsystem 1 ist weiter so beschaffen, dass ein Datenaustauch 11 der Module 6 - 10 untereinander, eines oder aller Module 6 - 10 mit einem oder allen autonomen Fahrzeugen 2 und zwischen den autonomen Fahrzeugen 2 möglich ist. Zudem ist das Assistenzsystem 1 so beschaffen, dass der Datenaustausch 11 auch mit einem externen Server 12 erfolgt. In erfindungsgemäßer Weise kann der Server 12 als Daten-Cloud 13 ausgeführt sein. Damit das Assistenzsystem 1 in erfindungsgemäßer Weise arbeiten kann umfasst das Assistenzsystem 1 zunächst eine oder mehrere Datenverarbeitungseinrichtungen 14a..n, ein oder mehrere Datensendeeinrichtungen 15a..n und ein oder mehrere Datenempfangseinrichtungen 16a..n. Damit der beschriebene Datenaustausch 11 umfassend möglich ist sind jedem der autonomen Fahrzeuge 2 und dem einen oder gegebenenfalls mehreren Servern 12 zumindest jeweils eine Datenverarbeitungseinrichtung 14a..n, zumindest jeweils eine Datensendeeinrichtung 15a..n und zumindest jeweils eine Datenempfangseinrichtung 16a..n zugeordnet. Zudem umfasst jede der Datenverarbeitungseinrichtungen 14a..n eine Speichereinheit 17 mit wenigstens einer darin hinterlegten Datenbank 18 sowie einer Recheneinheit 19, die zur Verarbeitung von in der Speichereinheit 17 hinterlegten Daten eingerichtet ist. Die Recheneinheit 19 umfasst zudem eine Eingabe-Ausgabeeinheit 20, mittels der Daten aus der Datenbank 18 abgerufen, eingegeben oder geändert werden können. Die Speichereinheit 17 und die Recheneinheit 19 können voneinander entfernt angeordnet sein. Die Speichereinheit 17 und die Recheneinheit 19 kommunizieren miteinander mittels eines Netzwerkes. Die beschriebenen Module 6 -10 sind in einer bevorzugten Ausgestaltung Bestandteil der dem Server 12 zugeordneten Datenbank 18.

Weiter liegt es im Rahmen der Erfindung, dass das als autonome landwirtschaftliche Arbeitsmaschine 3 ausgeführte autonome Fahrzeug 2 entweder ein universelles Grundfahrzeug 21 oder ein bereits spezifisch ausgeführtes Grundfahrzeug 22 umfasst, wobei das spezifisch ausgeführte Grundfahrzeug 22 etwa als Traktor 23, als Mähdrescher 24, als Feldhäcksler 25 oder als sogenanntes Anbaugerät 26, etwa als Ladewagen, 27 Ballenpresse 28 oder Futtererntemaschine 29 ausgeführt sein kann.

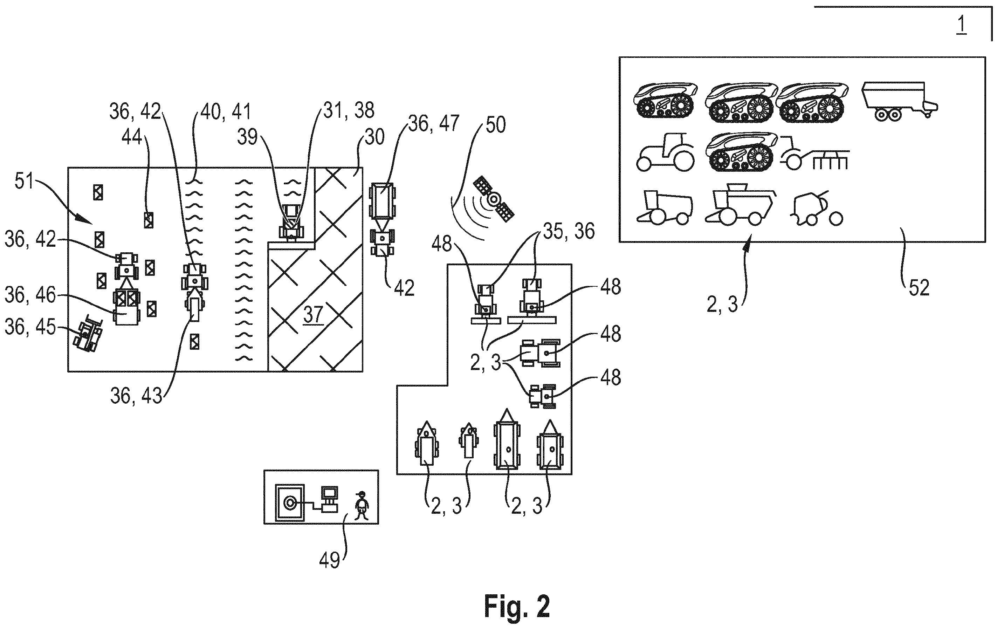

Figur 2 zeigt schematisch das erfindungsgemäß auf elektronischem Datenaustausch basierende Assistenzsystem 1 am Beispiel eines konkreten landwirtschaftlichen Anwendungsfalles, nämlich der Planung der Prozesskette - Abernten einer Anbaufläche 30 und Bergung des Erntegutes 31 -.

Unter konventionellen Bedingungen, d.h. die in den Prozess eingebundenen Fahrzeuge sind bemannt, würde die Prozesskette - Abernten einer Anbaufläche 30 und Bergung des Erntegutes 31 - wie folgt strukturiert sein:
Zunächst würden ein oder mehrere als Mähdrescher 35 ausgeführte landwirtschaftliche Arbeitsmaschinen 36 den auf einer Anbaufläche 30 gewachsenen Bestand 37 abernten. Im dargestellten Ausführungsbeispiel werden der von den Fruchtständen 38 gebildete Teil des Erntegutes 31 auf dem Mähdrescher 35 in einem sogenannten Korntank 39 zwischengespeichert, während der verbleibende Teil des Erntegutes 31, das Stroh 40, in Schwaden 41 auf der Anbaufläche 30 abgelegt wird. Hat das in Schwaden 41 abgelegte Stroh 40 einen die Einlagerung des Strohs 40 zulassenden Feuchtegehalt erreicht, verpresst eine von einem Traktor 42 gezogene Ballenpresse 43 das Stroh 40 zu Erntegutballen 44, die zunächst auf der Anbaufläche 30 abgelegt werden. In einem weiteren Arbeitsgang der Prozesskette werden die Erntegutballen 44 beispielsweise mittels sogenannter Hubstapler 45 auf von Traktoren 42 gezogene Pritschenanhänger 46 verladen und zur Einlagerung abtransportiert. In analoger Weise werden die im Korntank 39 zwischengespeicherten Fruchtstände 38 von schleppergezogenen Transportanhängern 47 übernommen und zur Einlagerung oder Weiterverarbeitung geführt. Moderne landwirtschaftliche Arbeitsmaschinen 36 verfügen zudem über Sende- und Empfangseinheiten 48 mittels derer sie mit weiteren landwirtschaftlichen Arbeitsmaschinen 36 und/oder stationären Einrichtungen 49 in Kommunikation treten können, wobei die Sende- und Empfangseinheiten 48 in der Regel auch satellitengenerierte GPS-Signale 50 empfangen, die dann beispielsweise zur Generierung von Positionsdaten der jeweiligen landwirtschaftlichen Arbeitsmaschine 36 herangezogen werden. Auch bei der Abarbeitung von Prozessketten mittels konventioneller landwirtschaftlicher Arbeitsmaschinen 36 werden die erforderlichen landwirtschaftlichen Arbeitsmaschinen 36, die erforderliche Maschinenflotte 51 aus einem Fuhrpark 52 zusammengestellt.

Soll nun diese bekannte Prozesskette unter Verwendung des zuvor beschriebene erfindungsgemäßen Assistenzsystems 1 abgearbeitet werden sind einige oder aller der konventionellen, bemannten landwirtschaftlichen Arbeitsmaschinen 36 durch die erfindungsgemäß als autonome landwirtschaftliche Arbeitsmaschinen 3 ausgeführten autonomen Fahrzeuge 2 zu ersetzen. Mithin kann die zur Abarbeitung der beispielhaft gewählten Prozesskette erforderliche Maschinenflotte 51 bemannte und unbemannte oder ausschließlich unbemannte landwirtschaftliche Arbeitsmaschinen 3, 36 umfassen, sodass auch der Fuhrpark 52 aus welchem die Maschinenflotte 51 zusammengestellt wird bemannte und unbemannte landwirtschaftliche Arbeitsmaschinen 3, 36 umfasst.

Vor dem Hintergrund, dass die Erfindung auf das Kreieren einer autonomen, also unbemannten landwirtschaftlichen Arbeitsmaschine 3 und zugehöriges Assistenzsystem 1 gerichtet ist werden im Folgenden bemannte landwirtschaftliche Arbeitsmaschinen 36 nicht mehr erwähnt. Es liegt jedoch im Rahmen der Erfindung, dass stets auch bemannte landwirtschaftliche Arbeitsmaschinen 36 in die beschriebenen oder beliebig gestalteten landwirtschaftlichen Prozessketten integriert sein können.

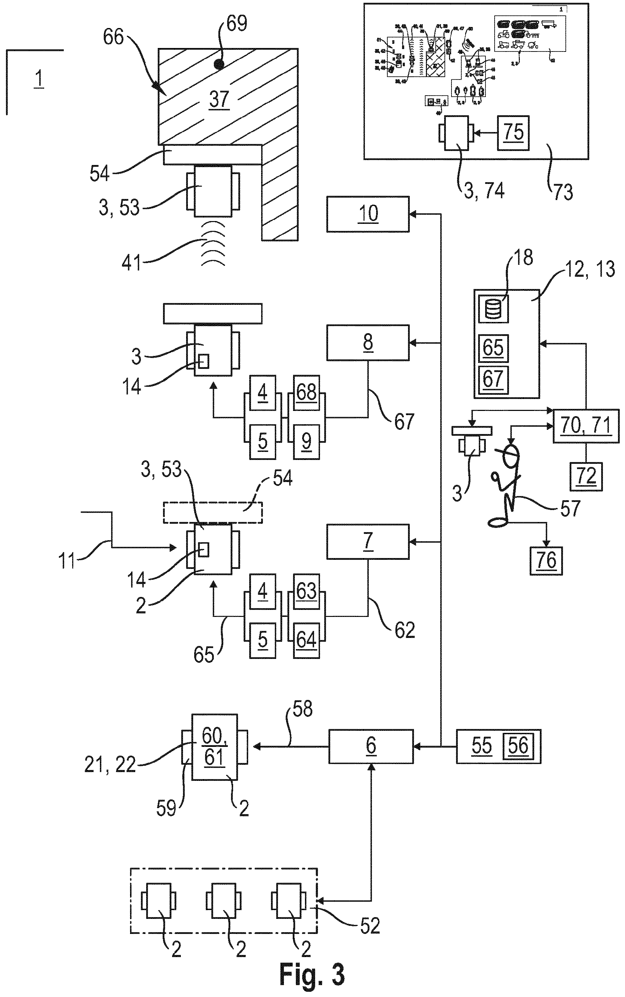

Figur 3 zeigt schematisch wie ein autonomes Fahrzeug 2 unter Einsatz des erfindungsgemäßen Assistenzsystems 1 zu der erfindungsgemäßen autonomen landwirtschaftlichen Arbeitsmaschine 3 gewandelt wird. Im hier exemplarisch gewählten Beispiel ist die autonome landwirtschaftliche Arbeitsmaschine 3 als Selbstfahrmähwerk 53 ausgeführt, welches eingerichtet ist mittels eines Mähvorsatzes 54 einen Erntegutbestand 37 abzuernten und in einem Schwad 41 abzulegen. Zunächst wird an das Modul "Einsatzplanung" 6 des Assistenzsystems 1 ein kundenspezifischer Einsatzplan 55 übermittelt. Das Modul "Einsatzplanung" 6 bestimmt dann zunächst die Zahl der notwendigen autonomen Fahrzeuge 2 und stellt deren Anzahl aus einem Fuhrpark 52 zusammen. Es liegt im Rahmen der Erfindung, dass die autonomen Fahrzeuge 2 aus einem oder verschiedenen Fuhrparks 52 zusammengestellt werden und ein oder mehrere autonome Fahrzeuge 2 umfassen können. Im Folgenden wird die Erstellung der autonomen landwirtschaftlichen Arbeitsmaschine 3 exemplarisch an einem einzigen autonomen Fahrzeug 2 beschrieben.

Der kundenspezifische Einsatzplan 55 ist dabei so beschaffen, dass er eine zu erbringende Dienstleistung 56 zumindest nach Art und Umfang beschreibt. Der Auftraggeber 57 bestellt die Dienstleistung 56 nach Art und Umfang. Sofern bekannt gibt er die jeweilige Einsatzzeit vor, nämlich zumindest denjenigen Zeitraum in welchem die Dienstleistung 56 zu erbringen ist. Weiter umfasst der kundenspezifische Einsatzplan 55 den oder die Einsatzorte sowie gegebenenfalls die Reihenfolge und Art der durchzuführenden Arbeitstätigkeiten 5.

Das Assistenzsystem 1 ermittelt aus dem Einsatzplan 55 in dem Modul "Einsatzplanung" 6 in einem Ergebnisschritt 58 eine erforderliche Anzahl von autonomen Fahrzeugen 2, wobei das autonome Fahrzeug 2, wie bereits beschrieben, als universelles Grundfahrzeug 21 oder bereits als spezifisch ausgeführtes Grundfahrzeug 22 ausgebildet sein kann. Im dargestellten Ausführungsbeispiel wäre das spezifisch ausgeführte Grundfahrzeug 22 dann das bereits vorkonfektionierte Selbstfahrmähwerk 53, sofern ein solches in einem Maschinenpark 52 verfügbar ist.

Das autonome Fahrzeug 2, unabhängig davon ob es als universelles Grundfahrzeug 21 oder bereits als spezifisch ausgeführtes Grundfahrzeug 22 ausgebildet ist ist in an sich bekannter und daher hier nicht näher beschriebenen Weise bereits so strukturiert, dass es über ein Fahrwerk 59 und zugehörige Energieübertragungsmittel 60 sowie eine Energiequelle 61, etwa einen Verbrennungs- oder Elektromotor und gegebenenfalls zugehörige Batterien verfügt.

Nach dem die geeignete Anzahl erforderlicher autonomer Fahrzeuge 2 ermittelt wurde leitet das Assistenzsystem 1 in der bereits beschriebenen Weise aus dem Einsatzplan 55 in einem Modul "erforderliche Informationen" 7 in einem Ergebnisschritt 62 für das autonomen Fahrzeug 2 Informationen 63 und Equipment 64 ab, sodass das autonome Fahrzeug 2 aus dem kundenspezifischen Einsatzplan 55 abgeleitete Fahrbewegungen 4 und Arbeitstätigkeiten 5 ausführen kann. Im Ergebnisschritt 62 wird ein Ergebnisdatensatz 65 generiert, der in dem bereits beschriebenen Server 12, der als Daten-Cloud 13 ausgeführt sein kann, hinterlegt und dem jeweiligen autonomen Fahrzeug 2 eindeutig zugeordnet. Das Fahrerassistenzsystem 1 ist zudem so strukturiert, dass es bei der Generierung der dem autonomen Fahrzeug 2 zuzuordnenden Informationen 63 Informationen aus verschiedensten Datenbanken 18 berücksichtigt, die geeignet sind eine optimierte Fahrbewegung 4 sowie eine optimierte Arbeitstätigkeit 5 des autonomen Fahrzeugs 2 sicherzustellen. Im hier dargestellten Ausführungsbeispiel umfasst der Ergebnisdatensatz 65 unter anderem Informationen die einen optimalen Betrieb des Mähvorsatzes 54 sicherstellen. Zudem umfasst der Ergebnisdatensatz 65 Informationen wie sich das autonome Fahrzeug 2 zum Einsatzort und/oder auf dem zu bearbeitenden Territorium 66 bewegen soll. Das dem autonomen Fahrzeug 2 im Ergebnisdatensatz 65 zugeordnete Equipment 64 muss sodann bereitgestellt und an das autonome Fahrzeug 2 angebaut werden. Dies kann in der Weise erfolgen, dass das Assistenzsystem 1 Anbieter des erforderlichen Equipments 64 identifiziert und entweder Anweisungen oder Aufträge generiert, die entweder das erforderliche Equipment 64 zum autonomen Fahrzeug 2 liefern oder das autonome Fahrzeug 2 zum erforderlich Equipment 64 beordert. In allen denkbaren Fällen muss letztendlich des erforderliche Equipment 64 an das autonome Fahrzeug 2 angebaut werden. Die sonstigen Informationen 63 des Ergebnisdatensatzes 65 können mittels des bereits beschriebenen Datenaustauschs 11 direkt an die dem jeweiligen autonomen Fahrzeug 2 zugeordnete Datenverarbeitungseinrichtung 14 übertragen werden. Im Ergebnis führt das dazu, dass das autonome Fahrzeug 2 in erfindungsgemäßer Weise in eine autonomen landwirtschaftlichen Arbeitsmaschine 3, hier ein Selbstfahrmähwerk 53, überführt wird. Es liegt im Rahmen der Erfindung, dass in Abhängigkeit von dem kundenspezifischen Einsatzplan 55 durch das Assistenzsystem 1 unterschiedlichste Informationen 63 und erforderliches Equipment 64 ermittelt und zusammengestellt werden, sodass jede Art von autonomer landwirtschaftlicher Arbeitsmaschine 3 kreiert werden kann, etwa Mähdrescher 24, Feldhäcksler 25, Traktoren 23, jede Art von Anbaugerät 26, Ladewagen 27, Ballenpressen 28, Futtererntemaschinen 29, Bodenbearbeitungsmaschinen, Sä- und Pflanzmaschinen und Düngerstreuer, um nur einige beispielhaft zu nennen.

Nachdem die eine oder die mehreren autonomen landwirtschaftlichen Arbeitsmaschinen 3 auf Basis des Ergebnisdatensatzes 65 konfektioniert sind ermittelt das Assistenzsystem 1 aus dem Einsatzplan 55 in dem bereits beschriebenen Modul "Steuerung" 8 einen weiteren Ergebnisdatensatz 67, der Steuerungsdaten 68 umfasst, die die jeweilige autonome landwirtschaftliche Arbeitsmaschine 3 bei Umsetzung der ermittelten Fahrbewegungen 4 und Arbeitstätigkeiten 5 steuert. Der weitere Ergebnisdatensatz 67 kann auf Basisdaten 9 beschränkt sein, wobei die vollständige Steuerung der autonomen landwirtschaftlichen Arbeitsmaschine 3 zur Realisierung der Fahrbewegungen 4 und der Arbeitstätigkeiten 5 von der autonomen landwirtschaftlichen Arbeitsmaschine 3 selbst bewirkt wird. Dies hat insbesondere den Vorteil, dass die autonome landwirtschaftliche Arbeitsmaschine 3 sich selbst in Abhängigkeit von ihren konkreten Einsatzbedingungen organisieren kann und zudem nicht auf eine permanente Verbindung mit dem Server 12 zwecks Datenaustausch 11 angewiesen ist. Der Ergebnisdatensatz 67 wird in dem bereits beschriebenen Server 12, der als Daten-Cloud 13 ausgeführt sein kann, hinterlegt und dem jeweiligen autonomen Fahrzeug 2 eindeutig zugeordnet.

Nachdem die jeweilige autonome landwirtschaftliche Arbeitsmaschine mit Informationen 63 und Equipment 64 konfektioniert ist übernimmt das Assistenzsystem 1 in der bereits beschriebenen Weise mittels eines Moduls "Überwachung" 10 die Überwachung der Fahrbewegung 4 und der Arbeitstätigkeit 5 der einen oder mehreren autonomen landwirtschaftlichen Arbeitsmaschinen 3 und bei Identifikation kritischer Situationen, etwa Hindernisse 69 im zu bearbeitenden Territorium 66 oder Funktionsstörungen in der Arbeitstätigkeit 5 greift das Assistenzsystem 1 in die Steuerung der jeweiligen autonomen landwirtschaftlichen Arbeitsmaschine 3 ein. Weiter ist vorgesehen, dass zumindest die beschriebene Überwachung der Fahrbewegung 4 und der Arbeitstätigkeit 5 der einen oder mehreren autonomen landwirtschaftlichen Arbeitsmaschinen 3 durch automatisiertes Buchen 70 einer externen Service-Dienstleistung 71 für die eine oder mehreren autonomen landwirtschaftlichen Arbeitsmaschinen 3 bewirkt wird. Die automatisierte Buchung dieser externen Service-Dienstleistung 71 kann von einem Auftraggeber 57 oder der autonomen landwirtschaftlichen Arbeitsmaschine 3 selbst vorgenommen werden. In diesem Zusammenhang kann vorgesehen sein, dass die von der mindestens einen oder den mehreren autonomen landwirtschaftlichen Arbeitsmaschinen 3 und/oder dem Auftraggeber 57 angeforderte externe Service-Dienstleistung 71 eine von der jeweiligen landwirtschaftlichen Arbeitsmaschine 3 entfernte Fernüberwachungs- und/oder Fernsteuerungsdienstleistung 71 ist, welche nach Anforderung freigeschaltet wird und die eingerichtet ist, die Fernüberwachung und/oder Fernsteuerung der mindestens einen oder der mehreren autonomen landwirtschaftlichen Arbeitsmaschinen 3 vorzunehmen.

Die mittels der Fernüberwachungs- und/oder Fernsteuerungsdienstleistung 71 zu überwachende und/oder zu steuernde zumindest eine landwirtschaftliche Arbeitsmaschine 3 verfügt, wie bereits beschrieben, über Mittel, vorzugsweise zumindest eine Datenverarbeitungseinrichtung 14, eine Datensendeeinrichtung 15 und eine Datenempfangseinrichtung 16 zum Übertragen von Maschinendaten und/oder Umfelddaten in regelmäßigen oder unregelmäßigen zeitlichen Abständen oder in Echtzeit an eine dem Server 12 zugeordnete Datenbank 18. Dabei werden die Maschinendaten und/oder Umfelddaten in der Datenbank 18 gesammelt und der jeweiligen autonomen landwirtschaftlichen Arbeitsmaschine 3 zugeordnet und mit weiteren verfügbaren Daten aus der unmittelbaren Umgebung der autonomen landwirtschaftlichen Arbeitsmaschine 3 verknüpft. Die in der Datenbank 18 des Servers 12 hinterlegten Maschinendaten und/oder Umfelddaten sind so strukturiert, dass das Assistenzsystem 1 jederzeit auf die autonome landwirtschaftliche Arbeitsmaschine 3 zugreifen und deren Steuerung übernehmen kann.

Zudem umfasst die Fernüberwachungs- und/oder Fernsteuerungsdienstleistung 71 einen Geo-Fence-Datensatz 72. Die Anwendung des Geo-Fence-Datensatzes 72 durch die eine oder die mehreren autonomen landwirtschaftlichen Arbeitsmaschinen 3 bewirkt, dass die Bewegung der zumindest einen oder der mehreren autonomen landwirtschaftlichen Arbeitsmaschinen 3 auf das zu bearbeitende Territorium 66 begrenzt ist und die eine oder die mehreren autonomen landwirtschaftlichen Arbeitsmaschinen 2 das zu bearbeitende Territorium 66 nicht unkontrolliert verlassen.

In einer vorteilhaften Ausgestaltung der Erfindung ist das Assistenzsystem 1 so beschaffen, dass es die eine oder mehreren autonomen landwirtschaftlichen Arbeitsmaschinen 3 einem Hauptprozess 73 als Unterstützer 74 zuordnet, wobei das Assistenzsystem 1 den Bedarf an Unterstützung in einem Umfeld der einen oder mehreren autonomen landwirtschaftlichen Arbeitsmaschinen 3 ermittelt und den verfügbaren autonomen landwirtschaftlichen Arbeitsmaschinen 3 in Abhängigkeit vom identifizierten Bedarf Aufträge 75 zuordnet. Beispielsweise kann der in Figur 1 detailliert beschriebene Hauptprozess 73, von bemannten und unbemannten landwirtschaftlichen Arbeitsmaschinen bearbeitet werden, wobei die erfindungsgemäßen autonomen landwirtschaftlichen Arbeitsmaschinen 3 beispielsweise als Ladewagen 27, Hubstapler 45, Pritschen- oder Transportanhänger 46, 47 oder als das beschriebene Selbstfahrmähwerk 53 ausgeführt sein können.

Zudem ist vorgesehen, dass der Auftraggeber 57 für das Buchen der Fernüberwachungs- und/oder Fernsteuerungsdienstleistung 71 eine Nutzungsgebühr 76 entrichtet.

Im Ergebnis wird unter Verwendung des beschriebenen erfindungsgemäßen Assistenzsystems 1 ein autonomes, fahrerloses Fahrzeug 2, welches eingerichtet ist selbstständig Fahrbewegungen 4 und Arbeitstätigkeiten 5 auszuführen, in Abhängigkeit von einem Einsatzfall 55 mit Informationen 63 und Equipment 64 konfektioniert um als speziell ausgeführte autonome landwirtschaftliche Arbeitsmaschine 3 zu agieren und wobei die Fahrbewegungen 4 und Arbeitstätigkeiten 5 der autonomen landwirtschaftlichen Arbeitsmaschine 3 zumindest teilweise fernüberwacht und/oder ferngesteuert werden und die Fernüberwachung und/oder Fernsteuerung zumindest teilweise mittels des Assistenzsystems 1 erfolgt.

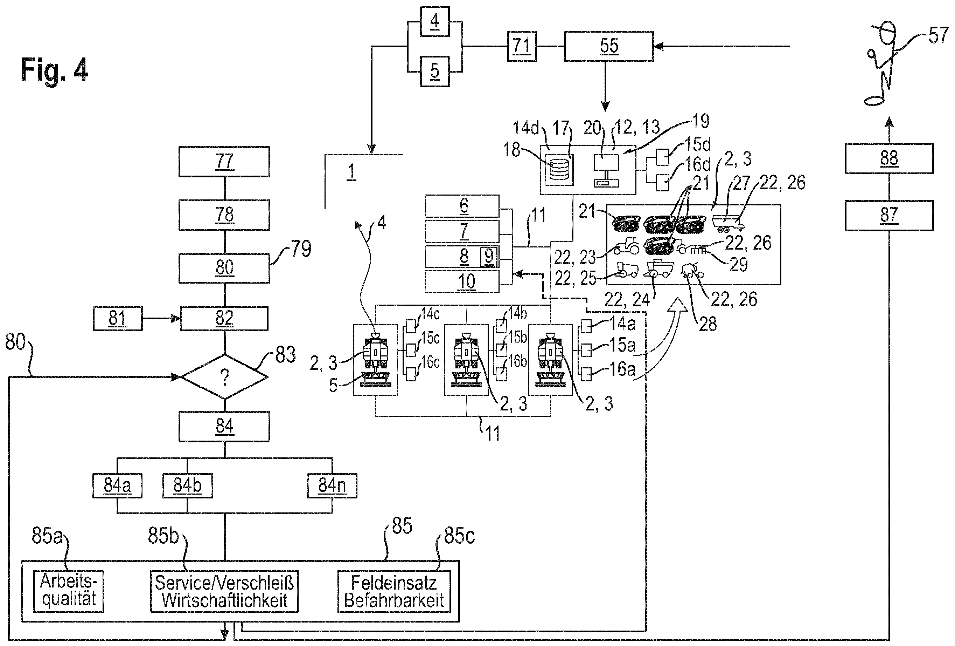

Fig. 4 zeigt nun schematisch, auf welche Weise das erfindungsgemäße Assistenzsystem 1 in noch näher zu beschreibender Weise eingerichtet ist, dem Auftraggeber 57, der entweder ein Farmer oder ein Lohnunternehmer sein kann, eine Arbeitsleistung der autonom agierenden landwirtschaftlichen Arbeitsmaschine 3 zur Verfügung zu stellen, die von gleichbleibend hoher Arbeitsqualität ist. Indem in noch näher zu beschreibender Weise sichergestellt wird, dass die Arbeitsqualität stets gleichbleibend hoch ist soll dem Auftraggeber 57, welcher keinen unmittelbaren Kontakt zur autonom agierenden landwirtschaftlichen Arbeitsmaschine 3 hat, nach Art einer Erfolgs- oder Geling-Garantie die Sicherheit geben werden, dass die Arbeitsqualität der autonomen landwirtschaftlichen Arbeitsmaschine 3 stets den Vorgaben des kundenspezifischen Einsatzplans 55 entspricht.

Wie bereits beschrieben übermittelt der Auftraggeber 57 einen kundenspezifischen Einsatzplan 55 an das Fahrerassistenzsystem 1, vorzugsweise an den Server 12. Der Einsatzplan 55 definiert gemäß den vorherigen Ausführungen Art und Umfang der zu erbringenden Servicedienstleistung 71, welche Fahrbewegungen 4 und Arbeitstätigkeiten 5 umfasst. Die dem Server 12 zugeordnete Recheneinheit 19 ist so beschaffen, dass sie in einem Analyseschritt 77 aus dem Einsatzplan 55 die vorgegebenen Zieldaten 78 extrahiert. Auf die in Figur 2 beschriebene Prozesskette bezogen können Zieldaten 78 beispielsweise ein von dem jeweiligen Mähdrescher 24, 35 einzuhaltender maximaler Kornverlust, ein einzuhaltender spezifischer Kraftstoffverbrauch, ein minimales Überrollen des zu bearbeitenden Territoriums 66 und/oder niedrige Stillstandzeiten sein, um beispielhaft nur einige zu nennen. Den ermittelten Zieldaten 78 werden sodann in einem Verfahrensschritt "Zuordnung" Soll-Grenzwerte 80 zugeordnet, die entweder exakt den im Einsatzplan 55 definierten Zieldaten 78 oder definierten, zugelassenen Abweichung von den Zieldaten 78 entsprechen. Wird beispielsweise in dem Einsatzplan 55 ein Kornverlust von 0,8% als Zieldaten 78 vorgegeben, so kann eine zulässige Abweichung, also der Soll-Grenzwert 80 beispielsweise 1% betragen. Mittels geeigneten, an sich bekannten und hier daher nicht näher erläuterten Sensoren 81 wird sodann im Arbeitsbetrieb der jeweiligen landwirtschaftlichen Arbeitsmaschine 3 der Ist-Wert 82 der jeweiligen Zieldaten 78, etwa der Ist-Kornverlust, ermittelt. In einem folgenden Vergleichsschritt 83 wird die Abweichung der Ist-Werte 82 von den Soll-Grenzwerten 80 der jeweiligen Zieldaten 78 ermittelt. Je nach Art der Zieldaten 78 kann sich die Über- oder Unterschreitung des jeweiligen Soll-Grenzwertes 80 negativ auf das Arbeitsergebnis der autonomen landwirtschaftlichen Arbeitsmaschine 3 auswirken. Als Beispiel für eine Überschreitung des Soll-Grenzwertes 80 sei hier beispielsweise der bereits beschriebene Kornverlust genannt. Ein Beispiel für eine Unterschreitung des Soll-Grenzwertes 80 der jeweiligen Zieldaten 78 kann beispielsweise ein vorgegebener Gutdurchsatz sein. Im Vergleichsschritt 83 wird daher berücksichtigt, ob eine Unterschreitung oder Überschreitung eines definierten Soll-Grenzwertes 80 zu einer Verschlechterung des Arbeitsergebnisses führt. Wird eine Verschlechterung des Arbeitsergebnisses aufgrund Unter- oder Überschreitung des jeweils definierten Soll-Grenzwertes 80 festgestellt ist das erfindungsgemäße Assistenzsystem 1 eingerichtet, eine oder mehrere Maßnahmen 84 einzuleiten, die den jeweiligen Ist-Wert 82 der Zieldaten 78 im Bereich des definierten Soll-Grenzwertes 80 halten. Überschreitet beispielsweise der Kornverlust den für ihn festgelegen Soll-Grenzwert 80, beispielsweise 1%, wird entweder die Fahrgeschwindigkeit und damit der Durchsatz der als Mähdrescher 35 ausgeführten autonomen landwirtschaftlichen Arbeitsmaschine 3 reduziert oder im umgekehrten Fall, bei Unterschreitung eines vorgegebenen Durchsatzes erhöht das erfindungsgemäße Assistenzsystem 1 die Fahrgeschwindigkeit der als Mähdrescher 35 ausgeführten autonomen landwirtschaftlichen Arbeitsmaschine 3 solange bis der Soll-Grenzwert 80 für den Gutdurchsatz wieder erreicht ist.

Es liegt im Rahmen der Erfindung, dass die abgeleitete Maßnahme 84 eine Einzelmaßnahme 84 ist oder sich aus einer Vielzahl von Maßnahmen 84a..n zusammensetzt, wobei die jeweiligen Maßnahmen 84a..n untereinander Wechselwirkungen aufweisen können.

Die jeweils identifizierten Maßnahmen 84a..n können in einer vorteilhaften Ausgestaltung der Erfindung in Kategorien 85 unterteilt sein und zumindest eine oder mehrere der Kategorien Arbeitsqualität 85a, Service/Verschleiß/Wirtschaftlichkeit 85b und optimierter Feldeinsatz/Befahrbarkeit 85c des zu bearbeitenden Territoriums 66 umfassen.

In die Kategorie Arbeitsqualität 85a fallen diejenigen Maßnahmen 84, welche unmittelbar die Arbeitsqualität der autonomen landwirtschaftlichen Arbeitsmaschine 3 betreffen, etwa der erwähnte Kornverlust oder der Erntegutdurchsatz. Im einfachsten Fall umfassen die der Kategorie Arbeitsqualität 85a zuzuordnenden Maßnahmen 84 diejenigen Maßnahmen 84, die die Arbeitsqualität der autonomen landwirtschaftlichen Arbeitsmaschine 3 verbessern, wobei die Arbeitsqualität von den aus dem jeweiligen Einsatzplan 55 extrahierten Zieldaten 78 der Fahrbewegungen 4 und Arbeitstätigkeiten 5 bestimmt wird. In diesem Zusammenhang kann es auch erforderlich sein, dass eine Maßnahme 84 das Nachladen von Skills in Form von Softwaremodulen betrifft, die die jeweilige autonome landwirtschaftliche Arbeitsmaschine 3 befähigen ganz bestimmte Arbeitstätigkeiten 5 oder Fahrbewegungen 4 auszuführen.

In die Kategorie Service/Verschleiß/Wirtschaftlichkeit 85b fallen diejenigen Maßnahmen 84, welche neben der Arbeitsqualität der autonomen landwirtschaftlichen Arbeitsmaschine 3 auch solche Maßnahmen 84 betreffen, welche ein kosteneffizientes Betreiben der landwirtschaftlichen Arbeitsmaschine sicherstellen, wobei kosteneffizientes Betreiben der landwirtschaftlichen Arbeitsmaschine zumindest den optimierten Einsatz von Energie, den optimierten Ersatz von Verschleißteilen und eine Optimierung von Stillstandzeiten umfasst.

Aufgrund dessen, dass die autonome landwirtschaftliche Arbeitsmaschine 3 von keinem Bediener überwacht wird muss sichergestellt werden, dass das autonome Fahrzeug 2 regelmäßig gewartet wird und verschlissene Bauteile oder ganze Baugruppen gewechselt oder im Fall von Zerkleinerungselementen nachgeschärft werden. Das Fahrerassistenzsystem 1 leitet in diesem Zusammenhang Servicezyklen und Wartungsprognosen ab, wobei hierfür an der jeweiligen autonomen landwirtschaftlichen Arbeitsmaschine 3 vorhandene Sensoren genutzt werden.

In diesem Zusammenhang können auch Wirtschaftlichkeitsbetrachtungen eine Rolle spielen, nämlich ob beispielsweise das Nachschleifen von Messern oder dergleichen wirtschaftlicher ist als deren kompletter Austausch oder möglicher Weise das Arbeiten mit abgestumpften Messern und der damit verbundene höhere Energiebedarf dann noch sinnvoll ist, wenn Stillstandzeiten aufgrund Messerwechsel oder -schleifen teurer sind als die ggf. auftretenden Ernteverluste bei drohenden Schlechtwetterfronten.

In die Kategorie Feldeinsatz/Befahrbarkeit 85c fallen diejenigen Maßnahmen 84, welche neben der Arbeitsqualität der autonomen landwirtschaftlichen Arbeitsmaschine 3 auch solche Maßnahmen 84 betreffen, welche zumindest den optimierten Einsatz von Energie, ein bodenschonendes Befahren des zu bearbeitenden Territoriums und eine Optimierung von Stillstandzeiten umfassen.

Neben der wartungs- und reparaturbedingten Optimierung von Stillstandzeiten wird der Feldeinsatz der autonomen landwirtschaftlichen Arbeitsmaschinen 3 auch dadurch optimiert, dass das Umfahren von Hindernissen und die Zusammenarbeit von mehreren autonom agierenden landwirtschaftlichen Arbeitsmaschinen 3 durch das erfindungsgemäße Assistenzsystem 1 koordiniert, gesteuert und überwacht wird. In diesem Zusammenhang ist es von Vorteil, wenn der Feldeinsatz der autonom agierenden landwirtschaftlichen Arbeitsmaschinen 3 in Abhängigkeit von äußeren oder inneren Einflüssen optimiert wird, wobei äußere Einflüsse etwa sich ändernde Witterungsbedingungen sein können, während innere Einflüsse die Beziehung zusammenarbeitender autonomer Fahrzeuge 2 untereinander betreffen. Eine verbesserte Arbeitsqualität der jeweiligen autonomen landwirtschaftlichen Arbeitsmaschine 3 wird in diesem Zusammenhang immer dann erreicht, wenn zusammenarbeitende Fahrzeuge 2 rechtzeitig zueinander finden und Kollisionen oder komplizierte Ausweichmanöver zwischen Fahrzeugen 2 auf einem gemeinsam zu bearbeitenden Territoriums 66 vermieden werden.

Hierzu können auch Maßnahmen 84 zählen, die das Umfahren bereits vorhandener Hindernisse oder sich möglicher Weise aufgrund verschlechterter Witterungsbedingungen, etwa Durchzug eines Regengebiets, noch ergebender Hindernisse, zum Beispiel schlecht befahrbare Bereiche wie Wasserlöcher umfassen.

Hierzu können weiter Maßnahmen 84 zählen, die ein optimiertes Betanken der autonomen Fahrzeuge 2 und im Falle von autonom agierenden Mähdreschern 3, 24 das optimierte Abtanken eines Korntanks 39 betreffen, wobei hier die Optimierung insbesondere die Reduzierung von Stillstandzeiten betrifft.

Im Kontext der Befahrbarkeit des zu bearbeitenden Territoriums 66 ist es zudem von Vorteil, wenn die abzuleitenden Maßnahmen 84 Bodendaten, Klimainformationen, Wetterdaten und Vegetationszustände des zu bearbeitenden Erntegutbestandes 37 berücksichtigen.

Eine Optimierung des Feldeinsatzes wird auch dadurch verbessert, wenn die abzuleitenden Maßnahmen 84 den Einsatz von Drohnen umfassen, wobei die von der Drohne in an sich bekannter Weise generierten Umfeldinformationen genutzt werden, das autonome Fahrzeug 2 optimal über das zu bearbeitende Territorium 66 zu führen.

Eine weitere Maßnahme 84 kann sich hier auf das sogenannte Geo-Fencing beziehen, wobei hier einerseits sichergestellt werden soll, dass das autonome Fahrzeug 2 nicht unkontrolliert das zu bearbeitende Territorium 66 verlässt und andererseits Personen nicht unkontrolliert in den Arbeitsbereich der autonomen Fahrzeuge 2 gelangen.

Auch die sogenannte qualitätsorientierte Routenplanung spielt in diesem Zusammenhang eine Rolle, wobei hier die abzuleitenden Maßnahmen 84 auf die Generierung angepasster Routenpläne gerichtet ist.

In erfindungsgemäßer Weise werden die abgeleiteten Maßnahmen 84 unter Einbeziehung der dem Assistenzsystem 1 zugeordneten Module "Einsatzplanung" 6, "erforderliche Informationen" 7, "Steuerung" 8 und "Überwachung" 10 umgesetzt. Je nach Art der umzusetzenden Maßnahmen 84 können ein oder mehrere dieser Module 6-8, 10 an den beschriebenen Optimierungsprozessen beteiligt sein.

Das Fahrerassistenzsystem 1 ist zudem so eingerichtet, dass die Abarbeitung des Vergleichsschrittes 83 und die damit verbundene Ableitung von Maßnahmen 84 in einer Abarbeitungsschleife 86 kontinuierlich durchlaufen werden solange die eine oder die mehreren autonomen Fahrzeuge 2 den kundenspezifischen Einsatzplan 55 abarbeiten. Zudem kann in diesem Zusammenhang vorgesehen sein, dass der Auftraggeber 57 eine Information erhält, in welchem Umfang die aus dem Einsatzplan 55 extrahierten Zieldaten 78 eingehalten wurden. Dies kann beispielsweise dadurch erfolgen, dass dem Auftraggeber 57 der Grad der Zielerreichung 87 kommuniziert wird.

Weiter ist das erfindungsgemäße Assistenzsystem 1 eingerichtet, dem Auftraggeber 57 eine Nutzungsgebühr 88 in Rechnung zu stellen, deren Höhe sich nach dem Grad der Zielerreichung 87 richtet und umso höher dotiert sein kann je besser das Fahrerassistenzsystem 1 die vom Auftraggeber 57 vorgegebenen Zieldaten 78 erreicht hat.

**Bezugszeichenliste:**

| | | | |
|---|---|---|---|
| 1 | Assistenzsystem | 34 | |
| 2 | autonomes Fahrzeug | 35 | Mähdrescher |
| 3 | autonome landwirtschaftliche Arbeitsmaschine | 36 | landwirtschaftliche Arbeitsmaschine |
| 4 | Fahrbewegung | 37 | Erntegutbestand |
| 5 | Arbeitstätigkeit | 38 | Fruchtstände |
| 6 | Modul "Einsatzplanung" | 39 | Korntank |
| 7 | Modul "erforderliche Informationen" | 40 | Stroh |
| 8 | Modul "Steuerung" | 41 | Schwad |
| 9 | Basisdaten | 42 | Traktor |
| 10 | Modul "Überwachung" | 43 | Ballenpresse |
| 11 | Datenaustausch | 44 | Erntegutballen |
| 12 | Server | 45 | Hubstapler |
| 13 | Daten-Cloud | 46 | Pritschenhänger |
| 14a..n | Datenverarbeitungseinrichtung | 47 | Transportanhänger |
| 15a..n | Datensendeeinrichtung | 48 | Sende- und Empfangseinheit |
| 16a..n | Datenempfangseinrichtung | 49 | stationäre Einrichtung |
| 17 | Speichereinheit | 50 | GPS-Signal |
| 18 | Datenbank | 51 | Maschinenflotte |
| 19 | Recheneinheit | 52 | Fuhrpark |
| 20 | Eingabe-Ausgabeeinheit | 53 | Selbstfahrmähwerk |
| 21 | Grundfahrzeug | 54 | Mähvorsatz |
| 22 | Grundfahrzeug | 55 | kundenspezifischer Einsatzplan |
| 23 | Traktor | 56 | Dienstleistung |
| 24 | Mähdrescher | 57 | Auftraggeber |
| 25 | Feldhäcksler | 58 | Ergebnisschritt |
| 26 | Anbaugerät | 59 | Fahrwerk |
| 27 | Ladewagen | 60 | Energieübertragungsmittel |
| 28 | Ballenpresse | 61 | Energiequelle |
| 29 | Futtererntemaschine | 62 | Ergebnisschritt |
| 30 | Anbaufläche | 63 | Information |
| 31 | Erntegut | 64 | Equipment |
| 32 | | 65 | Ergebnisdatensatz |
| 33 | | | |
| 66 | zu bearbeitendes Territorium | | |
| 67 | weiterer Ergebnisdatensatz | | |
| 68 | Steuerungsdaten | | |
| 69 | Hindernis | | |
| 70 | automatisiertes Buchen | | |
| 71 | Externe Service-Dienstleistung | | |
| 72 | Geo-Fence-Datensatz | | |
| 73 | Hauptprozess | | |
| 74 | Unterstützer | | |
| 75 | Auftrag | | |
| 76 | Nutzungsgebühr | | |
| 77 | Analyseschritt | | |
| 78 | Zieldaten | | |
| 79 | Verfahrensschritt "Zuordnung" | | |
| 80 | Soll-Grenzwert | | |
| 81 | Sensor | | |
| 82 | Ist-Wert | | |
| 83 | Vergleichsschritt | | |
| 84a..n | Maßnahme | | |
| 85a..c | Kategorie | | |
| 86 | Abarbeitungsschleife | | |
| 87 | Grad der Zielerreichung | | |
| 88 | Nutzungsgebühr | | |

## Patentansprüche

1. Auf elektronischem Datenaustausch (11) basierendes Assistenzsystem (1) zur Befähigung eines autonomen Fahrzeuges (2) als autonome landwirtschaftliche Arbeitsmaschine (3) zu agieren und einen von einem Auftraggeber (57) vorgegebenen Einsatzplan (55) abzuarbeiten, wobei der Einsatzplan (55) Zieldaten (78) umfasst, **dadurch gekennzeichnet, dass**
das Assistenzsystem (1) eingerichtet ist eine Erfolgsgarantie für die Erfüllung des Einsatzplanes (55) in der Weise zu garantieren, dass das Assistenzsystem (1) eingerichtet ist,
- aus dem Einsatzplan (55) die Zieldaten (78) zu extrahieren,
- den extrahierten Zieldaten (78) Soll-Grenzwerte (80) zuzuordnen
- die Ist-Grenzwerte der Zieldaten (78) und die Abweichung dieser Ist-Grenzwerte (82) zu den definierten Soll-Grenzwerten (80) zu ermitteln
- bei Über- oder Unterschreitung eines Soll-Grenzwertes (80) Maßnahmen (84a..n) einzuleiten, die den jeweiligen Ist-Grenzwert (82) im Bereich des definierten Soll-Grenzwertes (80) halten.

2. Auf elektronischem Datenaustausch (11) basierendes Assistenzsystem zur Befähigung eines autonomen Fahrzeuges (2) als autonome landwirtschaftliche Arbeitsmaschine (3) zu agieren nach Anspruch 1,
**dadurch gekennzeichnet, dass**
der Einsatzplan (55) Fahrbewegungen (4) und Arbeitstätigkeiten (5) der autonomen landwirtschaftlichen Arbeitsmaschine (3) definiert und zumindest für die Arbeitstätigkeiten (5) Zieldaten (78) definiert.

3. Auf elektronischem Datenaustausch (11) basierendes Assistenzsystem (1) zur Befähigung eines autonomen Fahrzeuges (2) als autonome landwirtschaftliche Arbeitsmaschine (3) zu agieren nach Anspruch 1,
**dadurch gekennzeichnet, dass**
die einzuleitenden Maßnahmen (84a..n) in Kategorien (85a..c) von Maßnahmen (84a..n) unterteilt sind und ein oder mehrere der Kategorien (85a..c) Arbeitsqualität (85a), Service/Verschleiß/Wirtschaftlichkeit (85b) und optimierter Feldeinsatz/Befahrbarkeit (85c) umfassen.

4. Auf elektronischem Datenaustausch (11) basierendes Assistenzsystem (1) zur Befähigung eines autonomen Fahrzeuges (2) als autonome landwirtschaftliche Arbeitsmaschine (3) zu agieren nach Anspruch 3,
**dadurch gekennzeichnet, dass**
die der Kategorie Arbeitsqualität (85a) zuzuordnenden Maßnahmen (84a..n) diejenigen Maßnahmen (84a..n) sind, die die Arbeitsqualität der autonomen landwirtschaftlichen Arbeitsmaschine (3) verbessern, wobei die Arbeitsqualität von den aus dem jeweiligen Einsatzplan (55) extrahierten Zieldaten (78) der Fahrbewegungen (4) und Arbeitstätigkeiten (5) bestimmt wird.

5. Auf elektronischem Datenaustausch (11) basierendes Assistenzsystem (1) zur Befähigung eines autonomen Fahrzeuges (2) als autonome landwirtschaftliche Arbeitsmaschine (3) zu agieren nach Anspruch 3,
**dadurch gekennzeichnet, dass**
die der Kategorie Service/Verschleiß/Wirtschaftlichkeit (85b) zuzuordnenden Maßnahmen (84a..n) diejenigen Maßnahmen (84a..n) sind, die die Arbeitsqualität der autonomen landwirtschaftlichen Arbeitsmaschine (3) verbessern, wobei die Arbeitsqualität von den aus dem jeweiligen Einsatzplan (55) extrahierten Zieldaten (78) der Fahrbewegungen (4) und Arbeitstätigkeiten (5) bestimmt wird.

6. Auf elektronischem Datenaustausch (11) basierendes Assistenzsystem (1) zur Befähigung eines autonomen Fahrzeuges (2) als autonome landwirtschaftliche Arbeitsmaschine (3) zu agieren nach Anspruch 3,
**dadurch gekennzeichnet, dass**
die der Kategorie optimierter Feldeinsatz/Befahrbarkeit (85c) zuzuordnenden Maßnahmen (84a..n) diejenigen Maßnahmen (84a..n) sind, die die Arbeitsqualität der autonomen landwirtschaftlichen Arbeitsmaschine (3) verbessern, wobei die Arbeitsqualität von den aus dem jeweiligen Einsatzplan (55) extrahierten Zieldaten (78) der Fahrbewegungen (4) und Arbeitstätigkeiten (5) bestimmt wird.

7. Auf elektronischem Datenaustausch (11) basierendes Assistenzsystem (1) zur Befähigung eines autonomen Fahrzeuges (2) als autonome landwirtschaftliche Arbeitsmaschine (3) zu agieren nach einem der vorhergehenden Ansprüche, **dadurch gekennzeichnet, dass**
das Assistenzsystem (1) die Steuerung und Überwachung der autonomen landwirtschaftlichen Arbeitsmaschine (3) mittels Modulen ermöglicht, wobei die Module die Module "Einsatzplanung" (6), "erforderliche Informationen" (7), "Steuerung" (8) und "Überwachung" (10) umfassen und die abgeleiteten Maßnahmen (84a..n) unter Einbeziehung der dem Assistenzsystem (1) zugeordneten Module "Einsatzplanung" (6), "erforderliche Informationen" (7), "Steuerung" (8) und "Überwachung" (10) umgesetzt werden, wobei je nach Art der umzusetzenden Maßnahmen (84a..n) ein oder mehrere dieser Module in den Optimierungsprozess eingebunden sind.

8. Auf elektronischem Datenaustausch (11) basierendes Assistenzsystem (1) zur Befähigung eines autonomen Fahrzeuges (2) als autonome landwirtschaftliche Arbeitsmaschine (3) zu agieren nach einem der vorhergehenden Ansprüche, **dadurch gekennzeichnet, dass**
das Assistenzsystem (1) eine Information generiert, in welchem Umfang die aus dem Einsatzplan (55) extrahierten Zieldaten (78) eingehalten wurden und wobei das Assistenzsystem (1) weiter eingerichtet ist, dem Auftraggeber diese Information als Grad der Zielerreichung (87) zu kommunizieren.

9. Auf elektronischem Datenaustausch (11) basierendes Assistenzsystem (1) zur Befähigung eines autonomen Fahrzeuges (2) als autonome landwirtschaftliche Arbeitsmaschine (3) zu agieren nach einem der vorhergehenden Ansprüche, **dadurch gekennzeichnet, dass**
das Assistenzsystem (1) eingerichtet ist, dem Auftraggeber (57) eine Nutzungsgebühr (88) in Rechnung zu stellen, deren Höhe sich nach dem Grad der Zielerreichung (87) richtet und wobei die Nutzungsgebühr (88) umso höher dotiert ist je besser das Fahrerassistenzsystem (1) die vom Auftraggeber (57) vorgegebenen Zieldaten (78) erreicht hat.

## Claims

1. An assistance system (1) based on electronic data exchange (11) for enabling an autonomous vehicle (2) to act as an autonomous agricultural working machine (3) and to execute an operational plan (55) specified by a user (57), wherein the operational plan (55) comprises target data (78),
**characterized in that**
the assistance system (1) is configured to assure a guarantee of success for the completion of the operational plan (55) **in that** the assistance system (1) is configured to
- extract the target data (78) from the operational plan (55),
- assign nominal thresholds (80) to the extracted target data (78),
- determine the actual thresholds for the target data (78) and the deviation of these actual thresholds (82) from the defined nominal thresholds (80),
- in the event of exceeding or dropping below a nominal threshold (80), initiating actions (84a..n) which hold the respective actual threshold (82) in the region of the defined nominal threshold (80).

2. The assistance system based on electronic data exchange (11) for enabling an autonomous vehicle (2) to act as an autonomous agricultural working machine (3) according to claim 1, **characterized in that**
the operational plan (55) defines travelling movements (4) and operational activities (5) of the autonomous agricultural working machine (3) and defines target data (78) at least for the operational activities (5).

3. The assistance system (1) based on electronic data exchange (11) for enabling an autonomous vehicle (2) to act as an autonomous agricultural working machine (3) according to claim 1,
**characterized in that**
the actions (84a..n) to be initiated are divided into categories (85a..c) of actions (84a..n) and one or more of the categories (85a..c) comprises operational quality (85a), service/wear/efficiency (85b) and optimised field use/accessibility (85c).

4. The assistance system (1) based on electronic data exchange (11) for enabling an autonomous vehicle (2) to act as an autonomous agricultural working machine (3) according to claim 3,
**characterized in that**
the actions (84a..n) to be assigned to the category of operational quality (85a) are those actions (84a..n) which improve the operational quality of the autonomous agricultural working machine (3), wherein the operational quality is determined from the target data (78) for the travelling movements (4) and operational activities (5) extracted from the respective operational plan (55).

5. The assistance system (1) based on electronic data exchange (11) for enabling an autonomous vehicle (2) to act as an autonomous agricultural working machine (3) according to claim 3,
**characterized in that**
the actions (84a..n) to be assigned to the category of service/wear/efficiency (85b) are those actions (84a..n) which improve the operational quality of the autonomous agricultural working machine (3), wherein the operational quality is determined from the target data (78) for the travelling movements (4) and operational activities (5) extracted from the respective operational plan (55).

6. The assistance system (1) based on electronic data exchange (11) for enabling an autonomous vehicle (2) to act as an autonomous agricultural working machine (3) according to claim 3,
**characterized in that**
the actions (84a..n) to be assigned to the category of optimised field use/accessibility (85c) are those actions (84a..n) which improve the operational quality of the autonomous agricultural working machine (3), wherein the operational quality is determined from the target data (78) for the travelling movements (4) and operational activities (5) extracted from the respective operational plan (55).

7. The assistance system (1) based on electronic data exchange (11) for enabling an autonomous vehicle (2) to act as an autonomous agricultural working machine (3) according to one of the preceding claims,
**characterized in that**
the assistance system (1) enables the control and monitoring of the autonomous agricultural working machine (3) to be carried out by means of modules, wherein the modules comprise the modules "deployment planning" (6), "required information" (7), "control" (8) and "monitoring" (10) and the derived actions (84a..n) are implemented taking the modules "deployment planning" (6), "required information" (7), "control" (8) and "monitoring" (10) associated with the assistance system (1) into consideration wherein, depending on the type of the actions (84a..n) to be implemented, one or more of these modules is integrated into the optimisation process.

8. The assistance system (1) based on electronic data exchange (11) for enabling an autonomous vehicle (2) to act as an autonomous agricultural working machine (3) according to one of the preceding claims,
**characterized in that**
the assistance system (1) generates information on the degree to which the target data (78) extracted from the operational plan (55) has been held to and wherein the assistance system (1) is further configured to communicate this information to the user as the degree of target achievement (87).

9. The assistance system (1) based on electronic data exchange (11) for enabling an autonomous vehicle (2) to act as an autonomous agricultural working machine (3) according to one of the preceding claims,
**characterized in that**
the assistance system (1) is configured to charge the user (57) a user fee (88) the amount of which is based on the degree of target achievement (87) and wherein the better the driver assistance system (1) has achieved the target data (78) specified by the user (57), the higher is the user fee (88) which is charged.

## Revendications

1. Système d'assistance (1) basé sur un échange de données (11) électronique, aux fins de permettre à un véhicule (2) autonome d'agir comme machine de travail agricole (3) autonome et d'exécuter un plan d'opérations (55) prédéterminé par un donneur d'ordre (57), le plan d'opérations (55) comprenant des données d'objectifs (78), **caractérisé en ce que**
le système d'assistance (1) est conçu pour assurer une garantie de réussite pour satisfaire au plan d'opérations (55), de telle sorte que le système d'assistance (1) est conçu pour
- extraire les données d'objectifs (78) du plan d'opérations (55),
- attribuer des valeurs limites de consigne (80) aux données d'objectifs (78) extraites,
- déterminer les valeurs limites réelles des données d'objectifs (78) et l'écart de ces valeurs limites réelles (82) par rapport aux valeurs limites de consigne (80) définies,
- en cas de passage au-dessus ou en-dessous d'une valeur limite de consigne (80), initier des mesures (84a..n) qui maintiennent la valeur limite réelle (82) respective dans la plage de la valeur limite de consigne (80) définie.

2. Système d'assistance basé sur un échange de données (11) électronique, aux fins de permettre à un véhicule (2) autonome d'agir comme machine de travail agricole (3) autonome, selon la revendication 1,
**caractérisé en ce que**
le plan d'opérations (55) définit des mouvements de déplacement (4) et des tâches de travail (5) de la machine de travail agricole (3) autonome et définit des données d'objectifs (78) au moins pour les tâches de travail (5).

3. Système d'assistance (1) basé sur un échange de données (11) électronique, aux fins de permettre à un véhicule (2) autonome d'agir comme machine de travail agricole (3) autonome, selon la revendication 1,
**caractérisé en ce que**
les mesures (84a..n) à initier sont divisées en catégories (85a..c) de mesures (84a..n), et une ou plusieurs des catégories (85a..c) englobent la qualité de travail (85a), le service/l'usure/la rentabilité (85b) et l'utilisation en champ/la praticabilité (85c) optimisées.

4. Système d'assistance (1) basé sur un échange de données (11) électronique, aux fins de permettre à un véhicule (2) autonome d'agir comme machine de travail agricole (3) autonome, selon la revendication 3,
**caractérisé en ce que**
les mesures (84a..n) devant être attribuées à la catégorie qualité de travail (85a) sont les mesures (84a..n) qui améliorent la qualité de travail de la machine de travail agricole (3) autonome, la qualité de travail étant déterminée par les données d'objectifs (78) des mouvements de déplacement (4) et des tâches de travail (5) extraites du plan d'opérations (55) respectif.

5. Système d'assistance (1) basé sur un échange de données (11) électronique, aux fins de permettre à un véhicule (2) autonome d'agir comme machine de travail agricole (3) autonome, selon la revendication 3,
**caractérisé en ce que**
les mesures (84..n) devant être attribuées à la catégorie service/usure/rentabilité (85b) sont les mesures (84a..n) qui améliorent la qualité de travail de la machine de travail agricole (3) autonome, la qualité de travail étant déterminée par les données d'objectifs (78) des mouvements de déplacement (4) et des tâches de travail (5) extraites du plan d'opérations (55) respectif.

6. Système d'assistance (1) basé sur un échange de données (11) électronique, aux fins de permettre à un véhicule (2) autonome d'agir comme machine de travail agricole (3) autonome, selon la revendication 3,
**caractérisé en ce que**
les mesures (84..n) devant être attribuées à la catégorie utilisation en champ/praticabilité (85c) sont les mesures (84a..n) qui améliorent la qualité de travail de la machine de travail agricole (3) autonome, la qualité de travail étant déterminée par les données d'objectifs (78) des mouvements de déplacement (4) et des tâches de travail (5) extraites du plan d'opérations (55) respectif.

7. Système d'assistance (1) basé sur un échange de données (11) électronique, aux fins de permettre à un véhicule (2) autonome d'agir comme machine de travail agricole (3) autonome, selon une des revendications précédentes,
**caractérisé en ce que**
le système d'assistance (1) permet la commande et la surveillance de la machine de travail agricole (3) autonome à l'aide de modules, les modules comprenant les modules « planification des opérations » (6), « informations nécessaires » (7), « commande » (8) et « surveillance » (10), et les mesures (84a..n) dérivées sont mises en œuvre en intégrant les modules « planification des opérations » (6), « informations nécessaires » (7), « commande » (8) et « surveillance » (10) associés au système d'assistance (1), sachant qu'en fonction du type de mesures (84a..n) à mettre en œuvre, un ou plusieurs de ces modules sont intégrés dans le processus d'optimisation.

8. Système d'assistance (1) basé sur un échange de données (11) électronique, aux fins de permettre à un véhicule (2) autonome d'agir comme machine de travail agricole (3) autonome, selon une des revendications précédentes,
**caractérisé en ce que**
le système d'assistance (1) génère une information indiquant à quel degré les données d'objectifs (78) extraites du plan d'opérations (55) ont été respectées, et le système d'assistance (1) étant en outre conçu pour communiquer au donneur d'ordre ces informations comme degré de réalisation de l'objectif (87).

9. Système d'assistance (1) basé sur un échange de données (11) électronique, aux fins de permettre à un véhicule (2) autonome d'agir comme machine de travail agricole (3) autonome, selon une des revendications précédentes,
**caractérisé en ce que**
le système d'assistance (1) est conçu pour facturer au donneur d'ordre (57) des frais d'utilisation (88) dont le montant est fonction du degré de réalisation de l'objectif (87), et les frais d'utilisation (88) étant d'autant plus élevés que le système d'assistance au conducteur (1) a atteint les données d'objectifs (78) prédéterminés par le donneur d'ordre (57).
